Europäisches Patentamt

European Patent Office

Office européen des brevets

(19)

(11) Numéro de publication: **0 223 712**
**B1**

(12) FASCICULE DE BREVET EUROPEEN

(45) Date de publication du fascicule du brevet:
28.06.89

(51) Int. Cl.⁴: **F16F 13/00**, B60K 5/12

(21) Numéro de dépôt: 86402555.6

(22) Date de dépôt: 18.11.86

(54) **Perfectionnements aux amortisseurs hydrauliques.**

(30) Priorité: 18.11.85 FR 8516997

(43) Date de publication de la demande:
27.05.87 Bulletin 87/22

(45) Mention de la délivrance du brevet:
28.06.89 Bulletin 89/26

(84) Etats contractants désignés:
BE DE ES GB IT NL SE

(56) Documents cités:
FR-A- 933 705
FR-A- 2 472 116
FR-A- 2 542 405
FR-A- 2 572 338
US-A- 4 518 058

PATENT ABSTRACTS OF JAPAN,
vol.9, no. 111 (M-379)[1834], 15 mai 1985

(73) Titulaire: HUTCHINSON, 2 rue Balzac, F-75008 Paris(FR)

(72) Inventeur: Dubos, Daniel, 9 Avenue Flachat,
F-92600 Asnières(FR)
Inventeur: Salaud, Jean-Luc, 37 Impasse de Pierrefitte,
F-78700 Conflans Sainte Honorine(FR)

(74) Mandataire: Behaghel, Pierre, CABINET
PLASSERAUD 84 rue d'Amsterdam, F-75009 Paris(FR)

## Description

L'invention concerne les dispositifs destinés à être interposés aux fins de soutien et d'amortissement entre deux éléments rigides individuellement soumis à certaines oscillations et/ou vibrations, l'amortissement faisant intervenir le refoulement d'un liquide à travers un passage étranglé.

A titre d'exemple non limitatif, on indique que de tels dispositifs peuvent être montés entre un châssis de véhicule et le moteur de ce véhicule en vue d'amortir aussi bien les oscillations imposées au châssis par les irrégularités et variations de déclivité du sol lors de la circulation du véhicule sur ce sol que les vibrations dues au fonctionnement du moteur.

L'invention concerne plus particulièrement, parmi les dispositifs du genre en question, ceux qui comportent un boîtier étanche interposé entre les deux éléments rigides, boîtier comportant une embase rigide solidarisable avec l'un des deux éléments rigides, un anneau rigide solidarisable avec l'autre élément rigide, une paroi élastique d'allure tronconique résistante à la compression axiale et reliant de manière étanche l'embase à l'anneau et une membrane flexible raccordée de manière étanche à l'anneau, l'intérieur de ce boîtier étant divisé, par une cloison étanche raccordée à l'anneau entre la paroi tronconique et la membrane, en deux chambres, savoir une chambre de travail du côté de la paroi tronconique et une chambre de compensation du côté de la membrane, ces deux chambres communiquant entre elles en permanence par le passage étranglé ci-dessus, lequel est ménagé entre les deux chambres et une masse liquide remplissant les deux chambres ainsi que le passage étranglé.

Avec un tel support, les oscillations ou vibrations créées entre les deux éléments rigides ont pour effet de rapprocher et d'écarter axialement à tour de rôle ces deux éléments l'un de l'autre, et donc de refouler le liquide de l'une des deux chambres dans l'autre à travers le passage étranglé et inversement : les cotes de ce passage, et en particulier sa longueur axiale et sa section, sont déterminées en fonction de la fréquence des phénomènes à amortir ou filtrer de façon telle que ces phénomènes créent dans la masse de liquide circulant dans ledit passage un effet de résonance propre à assurer l'amortissement ou filtrage désiré.

Dans les modes de réalisation connus de tels dispositifs (voir par exemple le document FR-A 2 542 405), ceux-ci sont interposés à la façon de supports, c'est-à-dire selon une direction verticale ou peu inclinée sur la verticale, entre les deux éléments rigides, de façon telle que le poids de l'élément supporté soit transmis à l'élément porteur en comprimant axialement la paroi tronconique.

L'invention concerne les variantes selon lesquelles les dispositifs du genre en question sont destinés à travailler selon une direction horizontale ou peu inclinée sur l'horizontale, et ce indifféremment selon les deux sens de cette direction, la paroi tronconique n'étant pratiquement pas sollicitée axialement pour la position moyenne du dispositif.

Le dispositif considéré n'assure plus alors entre les deux éléments rigides une fonction de support à proprement parler, mais une fonction de soutien ou maintien horizontal en ramenant constamment l'élément soutenu mobile vers une position moyenne de repos par rapport à l'élément souteneur fixe.

Une application particulièrement avantageuse d'un tel dispositif de soutien est celle pour laquelle ce dispositif sert à amortir les à-coups de couple engendrés dans le moteur d'un véhicule par les changements de régime brusques de ce moteur.

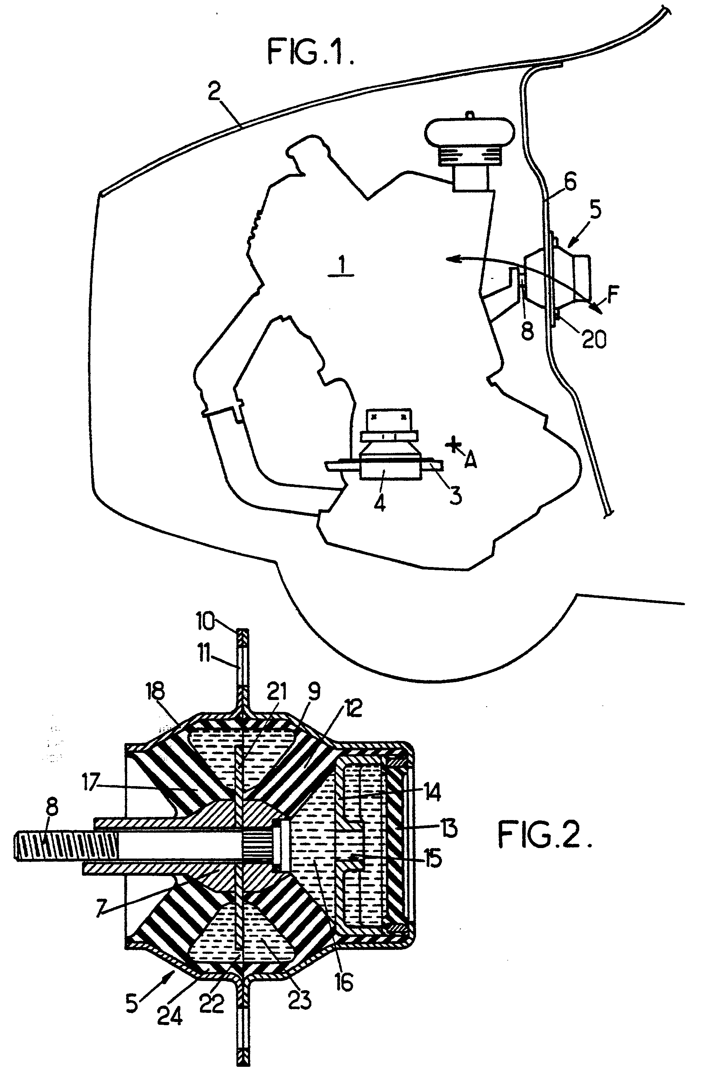

C'est une telle application qui fait l'objet de la figure 1, sur laquelle a été schématisé l'avant d'un véhicule équipé d'un moteur transversal 1.

Ce moteur, abrité par le capot 2, est monté sur le châssis 3 par l'intermédiaire de supports amortisseurs 4 qui peuvent être du type hydraulique ci-dessus décrit.

Lors des reprises du moteur, le couple exercé sur son arbre, d'axe A, subit des à-coups, lesquels sont transmis à l'ensemble de ce moteur, et il en est de même, mais en sens inverse, pour certaines décélérations brusques.

Les sollicitations angulaires correspondant à ces à-coups ont été représentées par les flèches F au niveau d'un dispositif de soutien complémentaire 5 situé à l'arrière du moteur, au-dessus de l'axe A, et servant à relier ce moteur à une portion verticale du tablier 6 du véhicule ou de l'ossature de ce tablier.

La direction de ces flèches F est peu inclinée sur l'horizontale et ici longitudinale par rapport au véhicule et le dispositif de soutien 5 considéré doit assurer solidement la liaison moteur-tablier tout·en amortissant le efforts brusquement appliqués sur lui selon lesdites flèches F dans l'un ou l'autre sens.

Ce sont les dispositifs de soutien horizontal de ce genre qui sont concernés par l'invention.

Les supports définis plus haut ne donnent pas satisfaction pour la constitution de tels dispositifs de soutien du fait que leurs parois tronconiques ne travaillent avec sécurité que dans le sens de leur compression axiale.

Or, si ces parois sont comprimées axialement en permanence dans le cas d'un support vertical, elles ne le seraient que pour l'un des deux sens de travail dans le cas d'un soutien horizontal, étant au contraire sollicitées à la traction axiale pour le sens contraire.

L'invention a pour but, surtout, de remédier à cet inconvénient en améliorant la sécurité de fonctionnement des dispositifs amortiseurs considérés.

A cet effet, les dispositifs amortisseurs du genre en question selon l'invention sont essentiellement caractérisés en ce qu'ils comportent en plus des éléments décrits ci-dessus, une seconde paroi élastique d'allure tronconique résistant à la compression axiale et orientée en sens inverse de la première, les petites bases de ces deux parois tronconiques étant juxtaposées axialement et solidarisées toutes les deux avec l'embase rigide et la grande base de la seconde paroi rigide étant elle-même solidarisée avec l'anneau rigide par une ossature rigide extérieure.

Une construction d'amortisseur hydraulique à double cône d'axe horizontal voisine de celle qui vient d'être définie a déjà été proposée dans le document JP-A 59 231 236. Mais cette construction comporte, entre les deux bagues élastiques tronconiques matérialisant les deux cônes, une troisième bague élastique centrale, et surtout on n'y trouve aucun équivalent au boîtier ci-dessus décrit, comprenant une chambre de travail et une chambre de compensation.

Dans des modes de réalisation préférés on a recours, en outre, à l'une et/ou à l'autre des dispositions suivantes :

- une plaque transversale rigide solidaire de l'embase est interposée entre les deux petites bases des deux parois tronconiques et présente une section transversale extérieure plus grande que la section transversale intérieure de l'extrémité axiale, de l'ossature rigide, qui est située du côté de la grande base de la seconde paroi tronconique ;

- dans un dispositif selon l'alinéa précédent, l'ossature rigide est continue et étanche et délimite avec les faces extérieures des deux parois tronconiques une chambre annulaire remplie de liquide, la plaque délimitant avec la portion d'ossature qui l'entoure un passage étranglé pour le circulation de ce liquide.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

Comme déjà dit, la figure 1 de ce dessin montre schématiquement l'avant d'un véhicule équipé d'un dispositif de soutien horizontal établi selon l'invention.

La figure 2 montre un tel dispositif en coupe axiale.

D'une façon connue en soi, le dispositif considéré, désigné généralement par la référence 5, comprend:

- un plot central rigide 7 solidaire d'un goujon de fixation 8,

- un anneau rigide 9 prolongé extérieurement par des pattes de fixation 10 elles-mêmes évidées par des lumières 11,

- une paroi élastique épaisse 12 en caoutchouc délimitée intérieurement et extérieurement par des surfaces tronconiques, paroi dont les deux extrémités sont adhérées respectivement sur le plot 7 et sur l'anneau 9,

- une membrane flexible 13 dont le pourtour est raccordé de façon étanche à l'anneau 9,

- une cloison rigide 14 perforée en son centre en 15 et interposée axialement entre la paroi épaisse 12 et la membrane 13, cloison dont le pourtour est raccordé de façon étanche à l'anneau 9, et

- une masse liquide 16 remplissant le volume intérieur au boîtier étanche ainsi constitué, y compris le passage 15.

On fait comprendre en outre ici à ce dispositif:

- une seconde paroi élastique épaisse 17 en caoutchouc orientée en sens inverse de la paroi 12, la petite base de cette seconde paroi 17 étant juxtaposée axialement à la petite base de ladite paroi 12 et adhérée comme cette dernière sur le plot central 7, lequel est allongé axialement en conséquence, et

- une ossature rigide extérieure 18 qui relie la grande base de la seconde paroi épaisse 17 à l'anneau 9.

Pour l'application évoquée ci-dessus du soutien longitudinal arrière supérieur d'un moteur transversal 1, schématisée sur la figure 1, le goujon 8 est fixé sur un talon 19 solidaire dudit moteur 1 et les deux pattes 10 sont fixées à l'aide de systèmes boulons-écrous 20 ou analogues traversant les lumières 11 sur une portion verticale du tablier 6, portion elle-même traversée par le dispositif concerné.

Dans ces conditions, pour l'état neutre ou de repos de ce dispositif, aucune des deux parois tronconiques 12 et 17 n'est sollicitée élastiquement ni à la compression axiale ni à la traction axiale.

A partir de cet état de repos, toute sollicitation angulaire exercée sur la partie haute du moteur 1 vers l'arrière (vers la droite sur les figures) se traduit par un fonctionnement du dispositif de soutien analogue à ceux des supports connus, ce fonctionnement faisant intervenir une compression axiale de la première paroi tronconique 12.

La seconde paroi tronconique 17 est alors sollicitée axialement à la traction, mais avec une amplitude très limitée qui correspond exactement à l'amplitude de la déformation axiale sous compression de la première paroi.

A l'inverse, une sollicitation angulaire orientée selon le sens inverse du précédent, c'est-à- dire vers la gauche sur les figures, se traduit par une compression axiale de la seconde paroi 17 et par une traction axiale d'amplitude limitée de la première paroi 12.

Ainsi, dans tous les cas, l'essentiel de l'effet élastique de déformation est encaissé par l'une des deux parois tronconiques travaillant à la compression et l'existence même de cette paroi limite à une valeur raisonnable la sollicitation à la traction de l'autre paroi.

Pour accroître encore la sécurité du dispositif, on prévoit avantageusement, entre les deux parois tronconiques, une plaque rigide transversale 21 solidaire du plot 7, cette plaque étant trop grande pour pouvoir passer à travers l'ouverture de l'ossature 18 située du côté de la grande base de la seconde paroi 17.

Ainsi, même si les deux parois tronconiques sont détruites, le moteur 1 demeure accroché au tablier 6 par butée de la plaque 21 contre la face interne de l'ouverture transversale de l'ossature 18.

Dans chaque cas, l'amortissement des oscillations et/ou vibrations s'effectue de la manière usuelle par étranglement du liquide 16 dans le passage 15.

Au moins un amortissement complémentaire ajusté sur une fréquence autre que celle prise en compte par le passage 15 peut être avantageusement prévu, par exemple en constituant, d'une façon connue en soi, une portion de la face intérieure qui délimite le boîtier étanche rempli du liquide 16 par une cloison déformable ou mobile à amplitude de débattement limitée.

Selon un autre perfectionnement, la chambre annulaire délimitée par les faces extérieures des deux parois tronconiques 12 et 17 et par la face intérieure de l'ensemble ossature 18-anneau 9 est prévue étanche, on ménage à l'intérieur de cette chambre un espace annulaire 22 de largeur radiale prédéterminée entre le pourtour de la plaque 21 et la portion de paroi qui l'entoure et on remplit ladite chambre d'un liquide amortisseur 23.

L'étranglement de ce liquide 23 dans le passage 22 lors des déformations du dispositif peut être exploité pour amortir l'un des phénomènes oscillatoires ou vibratoires susceptibles de se manifester et non amortis autrement.

Dans cette dernière construction, l'ossature 18 et l'anneau 9 se présentent tous deux sous la forme de coquilles annulaires comportant toutes les deux une collerette radiale prolongée extérieurement par les pattes de fixation 10 perforées.

Ces deux coquilles sont assemblées de façon étanche l'une contre l'autre par soudure de ces collerettes l'une sur l'autre.

La face intérieure desdites coquilles est avantageusement tapissée par un revêtement protecteur en caoutchouc 24 venu de moulage avec les parois 12 et 17 correspondantes.

En suite de quoi, et quel que soit le mode de réalisation adopté, on obtient finalement un dispositif amortisseur de soutien horizontal dont la constitution, le fonctionnement et les avantages résultent suffisamment de ce qui précède.

Comme il va de soi, l'invention ne se limite aucunement aux modes de réalisation et d'application qui ont été décrits ci-dessus.

Elle s'étend, au contraire, à toutes les variantes envisageables et, en particulier :
- à celles où les parois annulaires d'allure tronconique résistant à la compression axiale seraient délimitées intérieurement et/ou extérieurement par des faces ayant une forme autre que tronconique, c'est-à-dire de révolution avec une demi-section axiale en forme de segment de droite oblique, ladite forme pouvant par exemple être encore de révolution et évasée, mais avec une demi-section axiale en forme de C ou de S, ou bien être encore annulaire et évasée, mais non de révolution,
- à celles où le passage étranglé qui fait communiquer les deux faces de la cloison rigide 14, au lieu d'être constitué par un trou 15 évidé au centre de cette cloison, serait constitué d'une façon connue en soi par un canal en arc de cercle s'étendant autour de ladite cloison,
- et à celles ou une portion de la chambre de travail serait délimitée d'une façon connue en soi par une cloison mobile ou déformable susceptible de se déplacer ou déformer perpendiculairement à elle-même, avec une amplitude limitée à une valeur faible, notamment de l'ordre de 0,5 mm, de façon à filtrer certaines vibrations de petite amplitude et de fréquence relativement élevée.

**Revendications**

1. Dispositif destiné à être interposé aux fins de soutien et d'amortissement entre deux éléments rigides, comprenant un boîtier étanche interposé entre les deux éléments rigides, boîtier comportant une embase rigide (7) solidarisable avec l'un des deux éléments rigides, un anneau rigide (9) solidarisable avec l'autre élément rigide, une paroi élastique (12) d'allure tronconique résistante à la compression axiale et reliant de manière étanche l'embase à l'anneau, et une membrane flexible (13) raccordée de manière étanche à l'anneau, l'intérieur de ce boîtier étant divisé, par une cloison étanche (14) raccordée à l'anneau entre la paroi tronconique et la membrane, en deux chambres communiquant entre elles en permanence par un passage étranglé (15), et une masse liquide (16) remplissant les deux chambres ainsi que le passage étranglé, caractérisé en ce qu'il comporte en outre une seconde paroi élastique (17) d'allure tronconique résistant à la compression axiale et orientée en sens inverse de la première (12), les petites bases de ces deux parois tronconiques étant juxtaposées axialement et solidarisées toutes les deux avec l'embase rigide (7), et une ossature rigide extérieure (18) reliant la grande base de la seconde paroi rigide à l'anneau rigide (9).

2. Dispositif selon la revendication 1, caractérisé en ce qu'une plaque transversale rigide (4) solidaire de l'embase (7) est interposée entre les deux petites bases des deux parois tronconiques (12, 17) et présente une section transversale extérieure plus grande que la section transversale intérieure de l'extrémité axiale, de l'ossature rigide (18), qui est située du côté de la grande base de la seconde paroi tronconique (17).

3. Dispositif selon la revendication 2, caractérisé en ce que l'ossature rigide (18) est continue et étanche et délimite avec les faces extérieures des deux parois tronconiques (12, 17) une chambre annulaire remplie de liquide (23), la plaque (21) délimitant avec la portion d'ossature qui l'entoure un passage étranglé (22) pour le circulation de ce liquide.

**Patentansprüche**

1. Hydraulischer Dämpfer, der zum Abstützen und Dämpfen zwischen zwei starren Elementen eingefügt ist, mit einem dichten Gehäuse, das zwischen den starren Elementen angeordnet ist und einen starren Ansatz (7) enthält, der mit einem der beiden starren Elemente verbindbar ist, mit einem starren Ring (9), der mit dem anderen Element verbindbar ist, mit einer elastischen Wand (12) in kegelstumpfartiger Form, die widerstandsfähig gegen den axialen Druck ist und den Ansatz dicht mit dem starren Ring verbindet, und ferner mit einer flexiblen Membran (13), die dicht mit dem starren Ring verbunden ist, wobei das Gehäuseinnere durch eine Trennwand (14), die mit dem starren Ring zwischen der kegelstumpfartigene Wand und der Membran befestigt ist, in zwei Kammern unterteilt ist, die untereinander permanent durch eine enge Durchgangsöffnung (15) in Verbindung stehen, und mit einem flüssigen Medium (16), welches die beiden Kammern und die enge Durchgangsöffnung (15) ausfüllt, dadurch gekennzeichnet, daß eine zweite elastische Wand (17) in kegelstumpfartiger Form vorgesehen ist, die gegen den axialen Druck widerstandsfähig und gegenüber der ersten elastischen Wand (12) gegensinnig orientiert ist, da die kleinen Basen dieser zwei kegelstumpfartigen Wände (12, 17) axial nebeneinander liegen und beide mit dem starren Ansatz (7) verbunden sind, und daß ein äußeres starres Gerüst (18) die große Basis der zweiten Wand (17) starr mit dem starren Ring (9) verbindet.

2. Dämpfer nach Anspruch 1, dadurch gekennzeichnet, daß eine starre Querplatte (21), die mit dem Ansatz (7) fest verbunden ist, zwischen den zwei kleinen Basen der zwei kegelstumpfartigen Wände (12, 17) angeordnet ist und einen äußeren Querabschnitt bildet, der größer ist als der innere Querabschnitt des axialen Endes des starren Gerüstes (18), der sich an der Seite der großen Basis der zweiten kegelstumpfartigen Wand (17) befindet.

3. Dämpfer nach Anspruch 2, dadurch gekennzeichnet, daß das starre Gerüst (18) durchgehend und dicht ausgebildet ist und mit den Außenseiten der beiden kegelstumpfartigen Wände eine Ringkammer begrenzt, die mit Flüssigkeit (23) gefüllt ist, wobei die Querplatte (21) mit dem ungebundenen Abschnitt des Gerüstes (18) einen engen Durchgang (22) für die Flüssigkeitsbewegung begrenzt.

## Claims

1. Device intended to be inserted for the purposes of holding and damping between two rigid elements, including a sealed case inserted between the two rigid elements, which case includes a rigid base (7) able to be fixed to one of the two rigid elements, a rigid ring (9) able to be fixed to the other rigid element, a resilient wall (12) of a substantially truncated cone shape resisting axial compression and sealingly connecting the base to the ring and a flexible membrane (13) sealingly connected to the ring, the inside of this case being divided, by a sealed dividing wall (14) connected to the ring between the truncated cone shaped wall and the membrane, into two chambers permanently communicating with each other through a restricted passage (15), and a liquid mass (16) filling the two chambers as well as the restricted passage, characterized in that it further includes a second resilient wall (17) of a substantially truncated cone shape resisting axial compression and oriented in a direction opposite that of the first one (12), the small bases of these two truncated cone shaped walls being juxtaposed axially and both secured to the rigid base (7), and a rigid external framework (18) connecting the large base of the second rigid wall to the rigid ring (9).

2. Device according to claim 1, characterized in that a transverse rigid plate (4) integral with the base (7) is inserted between the two small bases of the two truncated cone shaped walls (12, 17) and has an external cross section larger than the internal cross section of the axial end, of the rigid framework (18), which is situated on the same side as the large base of the second truncated cone shaped wall (17).

3. Device according to claim 2 characterized in that the rigid framework (18) is continuous and sealed and defines with the outer faces of the two truncated cone shaped walls (12, 17) an annular chamber filed with liquid (23), the plate (21) defining with the framework portion which surrounds it a restricted passage (22) for the flow of this liquid.

# FIG.1.

# FIG.2.